# EUROPÄISCHE PATENTSCHRIFT

(11) **EP 1 604 881 B1**
(45) Veröffentlichungstag und Bekanntmachung des Hinweises auf die Patenterteilung: **26.03.2008**
(21) Anmeldenummer: 05011940.3
(22) Anmeldetag: 02.06.2005
(51) Int. Cl.: B62D 1/18

(54) **Verstellbare Lenksäule und Betriebsverfahren für eine solche Lenksäule**
Adjustable steering column; operating method for such a steering column
Colonne de direction réglable et procédé d'opération d'une telle colonne de direction

(30) Priorität: 07.06.2004 DE 202004009020 U
(43) Veröffentlichungstag der Anmeldung: 14.12.2005
(73) Patentinhaber: ThyssenKrupp Presta AG, 9492 Eschen (LI)
(72) Erfinder: Müller, Olaf, 65428 Rüsselsheim (DE)
(74) Vertreter: Lindner, Manfred Klaus

(56) Entgegenhaltungen:
- GB-A- 2 304 865
- US-A- 5 178 411
- PATENT ABSTRACTS OF JAPAN Bd. 2000, Nr. 24, 11. Mai 2001 (2001-05-11) -& JP 2001 199350 A (TOYOTA MOTOR CORP), 24. Juli 2001 (2001-07-24)
- PATENT ABSTRACTS OF JAPAN Bd. 017, Nr. 324 (M-1433), 21. Juni 1993 (1993-06-21) -& JP 05 039043 A (ASMO CO LTD), 19. Februar 1993 (1993-02-19)

## Beschreibung

Die Erfindung betrifft eine elektrisch verstellbare Lenksäule nach dem Oberbegriff des Anspruchs 1 und Betriebsverfahren dafür nach dem Oberbegriff des Anspruchs 7.

Zur Einstellung einer sicheren und komfortablen Position sind aus der Praxis bekannte Lenksäulen bei Pkws oft in der Länge und Höhe verstellbar. Bei den Versionen mit elektrischen Verstellmotoren wird üblicherweise für jede Verstellrichtung je ein Motor verwendet.

Die Zahnradfabrik Friedrichshafen verwendet gemäß Erfahrungen aus der Praxis einen Motor und eine Welle und kuppelt mit Elektromagneten jeweils die Gewindemutter an, die die Lenkradneigung bzw. die Vor-/Zurückposition angibt.

Die Firma Elba, Bremen, kuppelt bei einer aus der Praxis bekannten Lenksäule mit 2 flexiblen Wellen, deren Antrieb mit einer Kupplung zu- bzw. abgeschaltet wird, die beiden Verstellrichtungen an oder ab.

Aus Patent Abstracts of Japan ist unter der Publikationsnummer 2001199350 eine Fahrzeuglenkvorrichtung bekannt, bei der ein Lenkhilfsmotor, ein Teleskopiermechanismus und ein Schwenkmechanismus effizient eingesetzt werden. Der elektrische Motor dreht eine Übertragungswelle. Wenn die Übertragungswelle in einer ersten Position ist, wird die Drehung über ein Getriebe auf eine Lenkwelle übertragen, um die Lenkoperation des Lenkrades zu unterstützen. Wenn die Übertragungswelle in einer zweiten Position ist, wird die Drehung über andere Getriebe auf eine Gewindestange übertragen, um über eine Mutter ein Teleskoprohr in der Axialrichtung zu verstellen, um die Position des Lenkrades einzustellen. Wenn die Übertragungswelle in einer dritten Position ist, wird die Drehung über noch andere Getriebe auf eine weitere Gewindestange übertragen, um über noch eine eine Mutter und eine Verbindung ein oberes Rohr zu verschwenken, um die Position des Lenkrades einzustellen. Diese Anordnung ist sehr aufwändig und erfordert viel Bauraum sowie eine komplizierte Steuerung. Bei Problemen mit der elektrischen Lenksäulenverstellung kann die Lenkhilfe völlig ausfallen.

Die JP-2001-199350 offenbart damit eine elektrisch verstellbare Lenksäule mit einem Lenksäulenverstellantrieb und einer schwenkbar gelagerten Lenksäulenlagerung, wobei der Lenksäulenverstellantrieb eine innere Welle aufweist, die in einer weiteren Welle gelagert ist, wobei beide Wellen drehbar an der Lenksäulenlagerung gelagert sind, und wobei ein Motor über die weitere Welle den Längsantrieb bewirkt, während der Motor über die innere Welle den Höhenantrieb bewirkt.

Die vorliegende Erfindung hat und erreicht das Ziel, die bestehende Technik zu verbessern.

Die vorliegende Erfindung schafft dazu eine elektrisch verstellbare Lenksäule nach dem Anspruch 1 und ein Betriebsverfahren dafür nach dem Anspruch 7.

Damit schafft die vorliegende Erfindung weiterhin in vorteilhafter Weise kostengünstigere und einfache Alternativen zu den Ausführungen des Standes der Technik.

In vorzugsweiser Fortbildung der Erfindung ist der Lenksäulenverstellantrieb derart gestaltet, dass beide drehbaren, jedoch sonst ortsfesten Wellen mit jeweils einem Ritzel versehen sind. Dies kann mit Vorteil dadurch weitergebildet sein, dass die Wellenritzel mit Ritzeln eines Schaltgetriebes kämmen, das jeweils die Höhen- oder Längsbewegung einer Lenksäule in beiden Drehrichtungen bewirkt.

Weiterhin ist es bevorzugt, die elektrisch verstellbare Lenksäule und deren Betriebsverfahren dergestalt weiterzubilden, dass ein Kniehebelsystem für die Höhenverstellung vorgesehen und vorzugsweise derart geometrisch ausgelegt ist, dass die Antriebswellen ortsfest an der Lenksäulenlagerung fixiert werden können.

Noch eine weitere mit Vorzug vorgesehene vorrichtungs- und verfahrensmäßige Ausgestaltungsmöglichkeit der Erfindung besteht in einer Übertragung der Bewegung durch Kniehebel auf die gegenüber liegende Seite, damit eine nicht klemmende einwandfreie und "stabile" Verstellung ermöglicht wird.

Vorteile der Erfindung sind u.a. und insbesondere
- ein stabiles Antriebssystem für die Lenkradverstellung, da die Wellen ortsfest gelagert sind,
- ein einfacher Aufbau, da die Wellen ineinander stecken,
- die Möglichkeit, eine vorteilhafte und insbesondere notwendige Crashfestigkeit günstig zu erreichen, da beide Wellen ineinander ein eventuelle "Abknicken" verhindern,
- eine einfachere Lagerung der Wellen "ineinander" als bei einer getrennten Lagerung,
- wenig Platzbedarf der Wellen ineinander,
- geringeres Gewicht, und
- geringere Kosten.

Insbesondere und in vorteilhafter Weise schafft die vorliegende Erfindung somit in vorrichtungsmäßiger sowie auch verfahrensmäßiger Ausgestaltung ein einfaches System mit zwei ortsfest und drehbar ineinander laufenden Gewindespindeln zur Längs- und Höhenverstellung einer Lenksäule mit nur einem Motor und einem Schaltgetriebe.

Bevorzugte und/oder vorteilhafte Ausgestaltungen der Erfindung ergeben sich aus den Ansprüchen und deren Kombinationen sowie den gesamten vorliegenden Anmeldungsunterlagen.

Die Erfindung wird anhand von Ausführungsbeispielen nachfolgend unter Bezugnahme auf die Zeichnungen näher erläutert.

Anhand der nachfolgend beschriebenen und in den Zeichnungen dargestellten Ausführungs- und Anwendungsbeispiele wird die Erfindung lediglich exemplarisch näher erläutert. Verfahrens- und Vorrichtungsmerkmale ergeben sich jeweils analog auch aus Vorrichtungs- bzw. Verfahrensbeschreibungen.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

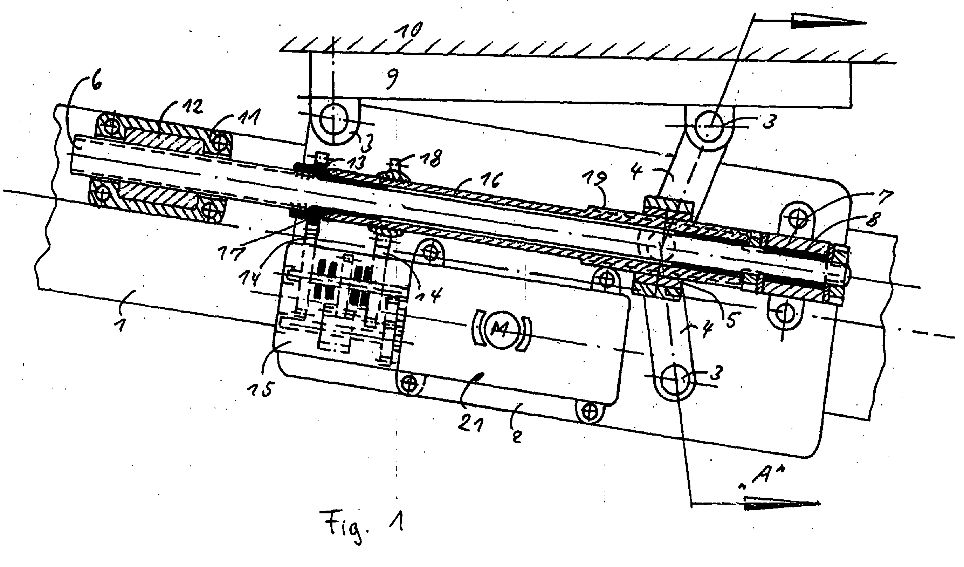

Die Fig. 1 zeigt ein Lenksäulenrohr 1, das in einer Lenksäulenlagerung 2 gelagert ist. Die Lenksäulenlagerung 2 ist schwenkbar mittels Gelenken/Lagern 3 an einer Befestigungsplatte 9 derart befestigt, dass die Lenksäulenlagerung 2 am vorderen Punkt geschwenkt werden kann und am hinteren Punkt Hebel 4 angebracht sind, die als doppelte Kniehebel ihrerseits an einer Mutter 5 angelenkt sind. Die Befestigungsplatte 9 ist wie üblich an der Karosserie 10 befestigt.

Für die Lenksäulenverstellung des Lenksäulenrohres 1 ist eine Antriebswelle 6 vorgesehen, die an einem Ende an der Lenksäulenlagerung 2 drehbar, aber nicht längs bewegbar, in einem "Fix-Lager" 7 mittels eines Lagers 8 gelagert ist. Diese Antriebswelle 6 ist auf dem Lenksäulenrohr 1 mittels eines Lagerbockes 11 fixiert, in dem eine Antriebsmutter 12 z.B. aus Messing, POM oder Sintermaterial untergebracht ist. Auf der Antriebswelle 6 ist weiter ein Antriebsritzel 13 befestigt, das seinen Antrieb von einem Ritzel 14 aus einem Schalt- und Untersetzungsgetriebe 15 bezieht.

Zur Bewegung der Längsverstellung treibt ein Motor 18 mit einem Ritzel 14 die Antriebswelle 6 an. Da die Antriebsmutter 12 im Lagerbock 11 fest gelagert ist, schiebt sich das Lenksäulenrohr 1 je nach Drehrichtung des Ritzels 14 vor- oder rückwärts.

Auf der Antriebswelle 6 zur Längsverstellung ist unabhängig drehbar eine Antriebswelle 16 zur Höhenverstellung als Hohlwelle gelagert. Alternativ können die vordere Lagerung 17 dieser Antriebswelle 16 und das Antriebsritzel 13 aus einem Teil gefertigt sein. Auf der Antriebswelle 16 zur Höhenverstellung ist ein Antriebsritzel 18 befestigt, das je nach Schaltstellung seine Bewegungsenergie vom Schalt- und Untersetzungsgetriebe 15 erhält und über ein zugeordnetes Ritzel 14 leitet.

Die Antriebswelle 16 zur Höhenverstellung hat am Aussendurchmesser ein Gewinde 19. Dieses Gewinde 19 dreht sich in der Mutter 5 und bewegt damit die Kniehebel 4, die durch ihre geometrische Anordnung eine Schwenkbewegung der Lenksäulenlagerung 2 erzeugen. Der untere Hebel 4 des Kniehebelsystems ist, wie gezeigt, seitlich an der Lenksäulenlagerung 2 befestigt.

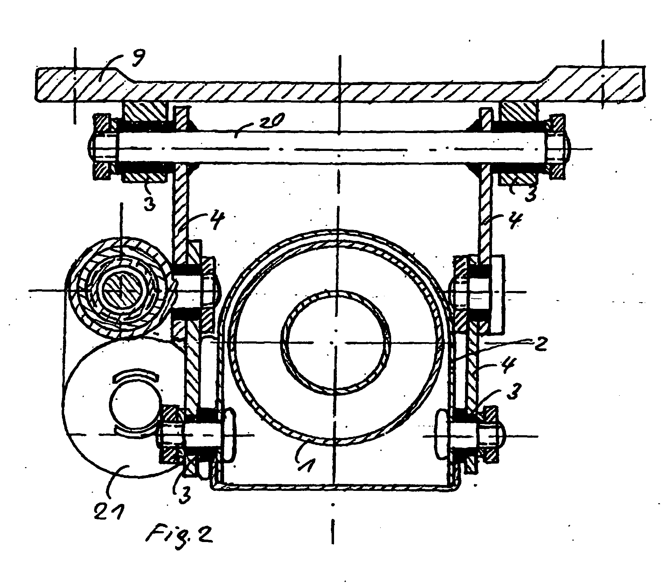

Die Fig. 2 zeigt im Schnitt A-A der Fig. 1 die Anordnung der Kniehebel 4 und deren Übertragung auf die andere Seite des Lenksäulenrohres 1 mittels einer Achse 20, an der beidseitig die Kniehebelpaare 4 befestigt sind. Die Achse 20 ist in Gelenken /Lagern 3, die an der Befestigungsplatte 9 befestigt sind, gelagert

Die Wellen 6 und 16 können zudem in vorteilhafter und bevorzugter Weise alternativ auch zusätzlich als Crashlastabsorber ausgelegt werden.

### Bezugszeichenliste

- 1: Lenksäulenrohr
- 2: Lenksäulenlagerung
- 3: Gelenke/Lager
- 4: Hebel
- 5: Mutter
- 6: Antriebswelle Längsverstellung
- 7: Fix-Lager
- 8: Lager
- 9: Befestigungsplatte
- 10: Karosse
- 11: Lagerbock
- 12: Antriebsmutter
- 13: Antriebsritzel zur Längsverstellung
- 14: Ritzel
- 15: Schalt- und Untersetzungsgetriebe
- 16: Antriebswelle für Höhenverstellung
- 17: Lagerung Antriebswelle
- 18: Antriebsritzel zur Höhenverstellung
- 19: Gewinde Höhenverstellung
- 20: Achse

## Patentansprüche

1. Elektrisch verstellbare Lenksäule mit einem Lenksäulenverstellantrieb und einer schwenkbar gelagerten Lenksäulenlagerung (2), wobei der Lenksäulenverstellantrieb eine innnere Welle (6) aufweist, die in einer weiteren Welle (16) gelagert ist, wobei beide Wellen (6, 16) drehbar jedoch sonst ortsfest an der Lenksäulenlagerung (2) gelagert sind, und wobei ein Motor (M) über die weitere Welle (16) den Höhenantrieb bewirkt, während der Motor (M) über die innere Welle (6) den Längsantrieb bewirkt.

2. Elektrisch verstellbare Lenksäule nach Anspruch 1, **dadurch gekennzeichnet, dass** der Lenksäulenverstellantrieb derart gestaltet ist, dass beide drehbaren, jedoch sonst ortsfesten Wellen (6, 16) mit jeweils einem Ritzel (13, 18) versehen sind.

3. Elektrisch verstellbare Lenksäule nach Anspruch 2, **dadurch gekennzeichnet, dass** die Wellenritzel (13, 18) mit Ritzeln (14, 14) eines Schaltgetriebes (15) kämmen, das jeweils die Höhen- oder Längsbewegung einer Lenksäule in beiden Drehrichtungen bewirkt.

4. Elektrisch verstellbare Lenksäule nach einem der Ansprüche 1 bis 3, **dadurch gekennzeichnet, dass** ein Kniehebelsystem für die Höhenverstellung vorgesehen ist.

5. Elektrisch verstellbare Lenksäule nach Anspruch 4, **dadurch gekennzeichnet, dass** das Kniehebelsystem für die Höhenverstellung derart geometrisch ausgelegt ist, dass die Wellen (6, 16) ortsfest an der Lenksäulenlagerung (2) fixiert werden können.

6. Elektrisch verstellbare Lenksäule nach einem der Ansprüche 1 bis 5, **dadurch gekennzeichnet, dass** eine Übertragung der Bewegung durch Kniehebel auf die gegenüber liegende Seite vorgesehen ist, damit eine nicht klemmende einwandfreie und "stabile" Verstellung ermöglicht wird.

7. Betriebsverfahren für eine elektrisch verstellbare Lenksäule mit einem Lenksäulenverstellantrieb und einer schwenkbar gelagerten Lenksäulenlagerung, (2), wobei der Lenksäulenverstellantrieb eine innnere Welle (6) aufweist, die in einer weiteren Welle (16) gelagert ist, wobei beide Wellen (6, 16) drehbar jedoch sonst ortsfest an der Lenksäulenlagerung (2) gelagert sind, und wobei ein Motor (M) über die weitere Welle (16) den Höhenantrieb übernimmt, während der Motor (M) über die innere Welle (6) den Längsantrieb übernimmt.

8. Betriebsverfahren für eine elektrisch verstellbare Lenksäule nach Anspruch 7, **dadurch gekennzeichnet, dass** der Lenksäulenverstellantrieb derart bewirkt wird, dass beide drehbaren, jedoch sonst ortsfesten Wellen (6, 16) mit jeweils einem Ritzel (13, 18) versehen sind.

9. Betriebsverfahren für eine elektrisch verstellbare Lenksäule nach Anspruch 8, **dadurch gekennzeichnet, dass** die Wellenritzel (13, 18) mit Ritzeln (14, 14) eines Schaltgetriebes (15) kämmen, das jeweils die Höhen- oder Längsbewegung einer Lenksäule in beiden Drehrichtungen bewirkt.

10. Betriebsverfahren für eine elektrisch verstellbare Lenksäule nach einem der Ansprüche 7 bis 9, **dadurch gekennzeichnet, dass** ein Kniehebelsystem die Höhenverstellung bewirkt.

11. Betriebsverfahren für eine elektrisch verstellbare Lenksäule nach Anspruch 10, **dadurch gekennzeichnet, dass** das Kniehebelsystem für die Höhenverstellung derart geometrisch ausgelegt ist, dass die Wellen (6, 16) ortsfest an der Lenksäulenlagerung (2) fixiert werden können.

12. Betriebsverfahren für eine elektrisch verstellbare Lenksäule nach einem der Ansprüche 7 bis 11, **dadurch gekennzeichnet, dass** eine Übertragung der Bewegung durch Kniehebel auf die gegenüber liegende Seite erfolgt, damit eine nicht klemmende einwandfreie und "stabile" Verstellung ermöglicht wird.

## Claims

1. Electrically adjustable steering column having a steering column adjusting drive and a pivotally mounted steering column bearing (2), wherein the steering column adjusting drive comprises an inner shaft (6) which is mounted in a further shaft (16), wherein both shafts (6, 16) are mounted in a rotatable but otherwise stationary manner on the steering column bearing (2), and wherein a motor (M) effects the height drive via the further shaft (16), whereas the motor (M) effects the longitudinal drive via the inner shaft (6).

2. Electrically adjustable steering column as claimed in claim 1, **characterised in that** the steering column adjusting drive is formed in such a manner that both rotatable but otherwise stationary shafts (6, 16) are provided with a pinion (13, 18) in each case.

3. Electrically adjustable steering column as claimed in claim 2, **characterised in that** the shaft pinions (13, 18) mesh with pinions (14, 14) of a manual transmission (15) which in each case effects the height or longitudinal movement of a steering column in both directions of rotation.

4. Electrically adjustable steering column as claimed in any one of claims 1 to 3, **characterised in that** a knee lever system is provided for the height adjustment.

5. Electrically adjustable steering column as claimed in claim 4, **characterised in that** the knee lever system for the height adjustment is designed geometrically such that the shafts (6, 16) can be fixed in a stationary manner on the steering column bearing (2).

6. Electrically adjustable steering column as claimed in any one of claims 1 to 5, **characterised in that** the movement is transmitted by knee levers to the opposite-lying side, so that a non-jamming, efficient and "stable" adjustment is permitted.

7. Operating method for an electrically adjustable steering column having a steering column adjusting drive and a pivotally mounted steering column bearing (2), wherein the steering column adjusting drive comprises an inner shaft (6) which is mounted in a further shaft (16), wherein both shafts (6, 16) are mounted in a rotatable but otherwise stationary manner on the steering column bearing (2), and wherein a motor (M) performs the height drive via the further shaft (16), whereas the motor (M) performs the longitudinal drive via the inner shaft (6).

8. Operating method for an electrically adjustable steering column as claimed in claim 7, **characterised in that** the steering column adjusting drive is effected in such a manner that both rotatable but otherwise stationary shafts (6, 16) are provided with a pinion (13, 18) in each case.

9. Operating method for an electrically adjustable steering column as claimed in claim 8, **characterised in that** the shaft pinions (13, 18) mesh with pinions (14, 14) of a manual transmission (15) which in each case effects the height or longitudinal movement of a steering column in both directions of rotation.

10. Operating method for an electrically adjustable steering column as claimed in any one of claims 7 to 9, **characterised in that** a knee lever system effects the height adjustment.

11. Operating method for an electrically adjustable steering column as claimed in claim 10, **characterised in that** the knee lever system for the height adjustment is designed geometrically such that the shafts (6, 16) can be fixed in a stationary manner on the steering column bearing (2).

12. Operating method for an electrically adjustable steering column as claimed in any one of claims 7 to 11, **characterised in that** the movement is transmitted by knee levers to the opposite-lying side, so that a non-jamming, efficient and "stable" adjustment is permitted.

## Revendications

1. Colonne de direction à réglage électrique, comprenant un entraînement de réglage de colonne et une monture de colonne (2) montée en pivotement, dans laquelle l'entraînement de réglage de colonne comprend un arbre intérieur (6) qui est monté dans un autre arbre (16), les deux arbres (6, 16) étant montés à rotation, mais par ailleurs stationnaires, sur la monture de colonne (2), et dans laquelle un moteur (M) provoque l'entraînement en hauteur via ledit autre arbre (16), alors que le moteur (M) provoque l'entraînement en longueur via l'arbre intérieur (6).

2. Colonne de direction à réglage électrique selon la revendication 1, **caractérisée en ce que** l'entraînement de réglage de colonne est conçu de telle façon que les deux arbres rotatifs (6, 16), par ailleurs stationnaires, sont dotés chacun d'un pignon (13, 18).

3. Colonne de direction à réglage électrique selon la revendication2, **caractérisée en ce que** les pignons (13, 18) des arbres engrènent avec des pignons (14, 14) d'un mécanisme de commutation (15) qui provoque un respectivement le mouvement en hauteur ou le mouvement en longueur d'une colonne de direction dans les deux sens de rotation.

4. Colonne de direction à réglage électrique selon l'une des revendications 1 à 3, **caractérisée en ce qu'**il est prévu un système de levier à genouillère pour le réglage en hauteur.

5. Colonne de direction à réglage électrique selon la revendication 4, **caractérisée en ce que** le système de levier àgenouillère pour le réglage en hauteur est conçu sur le plan géométrique de telle façon que les arbres (6, 16) peuvent être fixés de façon stationnaire sur la monture de colonne (2).

6. Colonne de direction à réglage électrique selon l'une des revendications 1 à 5, **caractérisée en ce qu'**il est prévu une transmission du mouvement par le levier à genouillère vers le côté opposé, de façon à permettre un réglage parfait sans coincement et stable.

7. Procédé de fonctionnement pour une colonne de direction à réglage électrique comprenant un entraînement de réglage de colonne et une monture de colonne (2) montée en pivotement, dans lequel l'entraînement de réglage de colonne comprend un arbre intérieur (6) qui est monté dans un autre arbre (16), les deux arbres (6, 16) étant montés en rotation, mais par ailleurs stationnaires, sur la monture de colonne (2), et dans lequel un moteur (M) assure l'entraînement en hauteur via l'autre arbre (16), alors que le moteur (M) assure l'entraînement en longueur via l'arbre intérieur (6).

8. Procédé de fonctionnement pour une cdonne de direction à réglage électrique selon la revendication 7, **caractérisé en ce que** l'entraînement de réglage de colonne est réalisé de telle façon que les deux arbres rotatifs (6, 16), par ailleurs stationnaires, sont chacun pourvus d'un pignon (13, 18).

9. Procédé de fonctionnement pour une colonne de direction à réglage électrique selon la revendication 8, **caractérisé en ce que** les pignons (13, 18) des arbres engrènent avec des pignons (14, 14) d'un mécanisme de commutation, qui assurent respectivement le mouvement en hauteur ou le mouvement en longueur d'une colonne de direction dans les deux sens de rotation.

10. Procédé de fonctionnement pour une colonne de direction à réglage électrique selon l'une des revendications 7 à 9, **caractérisé en ce qu'**un système de levier à genouillère provoque le réglage en hauteur.

11. Procédé de fonctionnement pour une colonne de direction à réglage électrique selon la revendication 10, **caractérisé en ce que** le système de levier à genouillère pour le réglage en hauteur est conçu sur le plan géométrique de telle façon que les arbres (6, 16) peuvent êtrefixés de façon stationnaire sur la monture de colonne (2).

12. Procédé de fonctionnement pour une colonne de direction à réglage électrique selon l'une des revendications 7 à 11, **caractérisé en ce qu'**une transmission du mouvement a lieu au moyen d'un levier à genouillère vers le côté opposé, afin de permettre un réglage parfait sans coincement et stable.
